# EUROPÄISCHE PATENTSCHRIFT

(11) **EP 2 695 146 B1**
(45) Veröffentlichungstag und Bekanntmachung des Hinweises auf die Patenterteilung: **13.07.2016**
(21) Anmeldenummer: 12714223.0
(22) Anmeldetag: 04.04.2012
(51) Int. Cl.: G01J 3/28, G01N 21/86, G07D 7/12

(54) **VERFAHREN ZUR PRÜFUNG VON WERTDOKUMENTEN**
METHOD FOR CHECKING VALUABLE DOCUMENTS
PROCÉDÉ DE CONTRÔLE DE DOCUMENTS DE VALEUR

(30) Priorität: 08.04.2011 DE 102011016509
(43) Veröffentlichungstag der Anmeldung: 12.02.2014
(73) Patentinhaber: Giesecke & Devrient GmbH, 81677 München (DE)
(72) Erfinder: RAUSCHER, Wolfgang, 94365 Parkstetten (DE); FRANKENBERGER, Jörg, 85570 Markt Schwaben (DE)
(86) Internationale Anmeldenummer: PCT/EP2012/001495
(87) Internationale Veröffentlichungsnummer: WO 2012/136363

(56) Entgegenhaltungen:
- EP-A2- 2 284 806
- US-A- 5 027 415
- US-A- 6 040 584

## Beschreibung

Die Erfindung betrifft ein Verfahren zur Prüfung von Wertdokumenten sowie einen Sensor und eine Vorrichtung, die das Verfahren ausführen.

Wertdokumente werden üblicherweise auf Echtheit oder auch auf ihren Zustand geprüft oder die Art des jeweiligen Wertdokuments wird bestimmt. Die Prüfung der Wertdokumente erfolgt in einer Vorrichtung zur Wertdokumentbearbeitung, in der, je nach den zu prüfenden Wertdokumenteigenschaften, einer oder mehrere Sensoren enthalten sind, die verschiedene Eigenschaften der Wertdokumente erfassen. Üblicherweise werden die Wertdokumente bei der Prüfung durch optische Sensoren geprüft, die das von dem Wertdokument ausgehende Licht detektieren. Das Wertdokument wird dabei üblicherweise relativ zu dem optischen Sensor bewegt. Derartige Verfahren werden zur Prüfung von Wertdokumenten wie z.B. Banknoten, Schecks, Ausweisen, Kreditkarten, Scheckkarten, Tickets, Gutscheinen und dergleichen verwendet.

Zur Echtheitsprüfung von Wertdokumenten sind Verfahren bekannt, bei denen die Remission eines zu prüfenden Wertdokuments mit der eines echten Wertdokuments verglichen wird. Dazu kann z.B. für eine oder mehrere bestimmte Wellenlängen die remittierte Intensität des zu prüfenden Wertdokuments mit der eines echten Wertdokuments verglichen werden. Bei zu großen Unterschieden im Vergleich zum echten Wertdokument wird das geprüfte Wertdokument als falsch eingestuft.

Eine optische Prüfung der Wertdokumente wird auch durchgeführt, um die neu hergestellten Wertdokumente, vor ihrer Auslieferung durch den Hersteller der Wertdokumente, einer Qualitätsprüfung zu unterziehen. Dabei wird zum Beispiel überprüft, ob das Druckbild des Wertdokuments bestimmten Vorgaben entspricht. Für diese optische Prüfung wird üblicherweise ein Bildsensor verwendet, der das von dem Wertdokument remittierte Licht in drei Farbkanälen detektiert, um jeweils ein Bild des Wertdokuments aufzunehmen, z.B. im roten, grünen und blauen Spektralbereich. Falls bei einem der geprüften Wertdokumente die aufgenommenen Bilder nicht dem gewünschten Druckbild entsprechen, wird das Wertdokument im Zuge der Qualitätsprüfung aussortiert. Bisher wird jedoch im Rahmen der Qualitätsprüfung von Wertdokumenten keine spektral aufgelöste optische Überprüfung der Wertdokumente durchgeführt.

US 6040584 zeigt ein Verfahren zur Prüfung von Banknoten.

Eine Aufgabe der vorliegenden Erfindung ist es daher, ein Verfahren zur Prüfung der Ähnlichkeit zwischen den Intensitätsspektren zu prüfender Wertdokumente und einem Referenzspektrum anzugeben, durch das Wertdokumente mit akzeptablem Intensitätsspektrum und Wertdokumente mit inakzeptablem Intensitätsspektrum zuverlässig voneinander unterschieden werden können.

Diese Aufgabe wird durch die Gegenstände der unabhängigen Ansprüche gelöst. In davon abhängigen Ansprüchen sind vorteilhafte Weiterbildungen und Ausgestaltungen der Erfindung angegeben.

Durch das erfindungsgemäße Verfahren wird die Ähnlichkeit des Intensitätsspektrums eines zu prüfenden Wertdokuments zu einem Referenzspektrum überprüft. Das Intensitätsspektrum, dessen Ähnlichkeit zu einem Referenzspektrum geprüft wird, ist z.B. ein Remissionsspektrum, Transmissionsspektrum oder Lumineszenzspektrum des Wertdokuments. Zur Aufnahme des Intensitätsspektrums des Wertdokuments wird das von dem Wertdokument ausgehende Licht bei mehreren verschiedenen Wellenlängen detektiert. Um die Ähnlichkeit des von dem zu prüfenden Wertdokuments aufgenommenen Intensitätsspektrums zu dem Referenzspektrum zu prüfen, wird nicht das aufgenommene Intensitätsspektrum selbst mit dem Referenzspektrum verglichen, sondern ein an das Referenzspektrum angepasstes korrigiertes Intensitätsspektrum, welches aus dem aufgenommenen Intensitätsspektrum durch eine lineare Korrektur hervorgeht. Die Korrekturparameter der (linearen) Korrekturfunktion sind jedoch nicht vorbestimmt, sondern werden durch das Anpassen des linear korrigierten Intensitätsspektrums an das Referenzspektrum ermittelt. Das Anpassen mit Hilfe der linearen Korrekturfunktion führt zu einer geringfügigen Verschiebung und/ oder Streckung des aufgenommenen Intensitätsspektrums. Durch das Anpassen des linear korrigierten Intensitätsspektrums an das Referenzspektrum wird erreicht, dass messtechnisch bedingte Schwankungen der detektierten Intensitäten des aufgenommenen Intensitätsspektrums, die für das zu prüfende Wertdokument nicht vorhersagbar sind oder bei der Prüfung des Wertdokuments nicht zur Verfügung stehen, zumindest teilweise ausgeglichen werden.

Dazu werden folgende Schritte durchgeführt: Das aufgenommene Intensitätsspektrum wird mit Hilfe einer linearen Korrekturfunktion korrigiert. Die lineare Korrekturfunktion verwendet einen ersten Korrekturparameter a und einen zweiten Korrekturparameter c. Die für die Korrektur notwendigen Werte der Korrekturparameter a, c sind zunächst nicht bekannt und werden erst im Laufe des Anpassens ermittelt. Mit Hilfe der linearen Korrekturfunktion wird aus dem aufgenommenen Intensitätsspektrum S(λ) ein korrigiertes Intensitätsspektrum S'(c, a, λ) = c + a·S(λ) gebildet. Das korrigierte Intensitätsspektrum S'(c, a, λ) = c + a·S(λ) wird an das Referenzspektrum angepasst, um eine durch ein Abstandsmaß definierte Abweichung, die das korrigierte Intensitätsspektrum S'(c, a, λ) von dem Referenzspektrum R(λ) aufweist, zu reduzieren. Insbesondere kann diese Abweichung durch das Anpassen minimiert werden. Der erste und zweite Korrekturparameter sind unabhängig von der Wellenlänge λ, d.h. für alle Wellenlängen wird derselbe erste Korrekturparameter c und derselbe zweite Korrekturparameter a verwendet. Dadurch wird erreicht, dass das korrigierte Intensitätsspektrum gegenüber dem aufgenommenen Intensitätsspektrums nicht verfälscht wird.

Die durch ein Abstandsmaß definierte Abweichung des korrigierten Intensitätsspektrums von dem Referenzspektrum ergibt sich durch Berechnen eines Abstandmaßes für die bei verschiedenen Wellenlängen vorliegenden Intensitätsunterschiede des korrigierten Intensitätsspektrums S'(c, a, λ) von dem Referenzspektrum R(λ). Das Abstandsmaß ist z.B. der euklidische Abstand, der Manhattan-Abstand, der Chessboard-Abstand oder ein anderer mathematischer Abstand des korrigierten Intensitätsspektrums S'(c, a, λ) von dem Referenzspektrum R(λ). Das Anpassen des korrigierten Intensitätsspektrums S'(c, a, λ) an das Referenzspektrum R(λ) erfolgt bevorzugt durch einen Least-Squares-Fit. Das korrigierte Intensitätsspektrum S'(c, a, λ) = c + a·S(λ) kann aber auch iterativ an das Referenzspektrum angepasst werden, z.B. durch Variieren der Korrekturparameter a und c.

Das Ergebnis der Anpassung ist ein an das Referenzspektrum angepasstes korrigiertes Intensitätsspektrum S'(λ) = c* + a*·S(λ), dessen erster Korrekturparameter c* und dessen zweiter Korrekturparameter a* ist, wobei c* und a* konkrete Zahlenwerte repräsentieren, die unabhängig von der Wellenlänge λ sind, d.h. für alle Wellenlängen gleich sind. Die durch das Abstandsmaß definierte Abweichung des korrigierten Intensitätsspektrums von dem Referenzspektrum ist bei c=c* und a=a* daher reduziert im Vergleich zu der durch das Abstandsmaß definierten Abweichung, die das aufgenommene Intensitätsspektrum von dem Referenzspektrum aufweist, oder nimmt sogar ein Minimum ein. Für das auf diese Weise ermittelte angepasste korrigierte Intensitätsspektrum S'(λ) = c* + a*·S( λ) wird anschließend ein Abstand berechnet, den das angepasste korrigierte Intensitätsspektrum S'(λ) = c* + a*·S(λ) von dem Referenzspektrum aufweist. Der berechnete Abstand wird zur Beurteilung der Ähnlichkeit zwischen dem aufgenommenen Intensitätsspektrum S(λ) und dem Referenzspektrum R(λ) verwendet.

Beim Anpassen werden die Korrekturparameter a und c beispielsweise solange variiert, bis die durch das Abstandsmaß definierte Abweichung ein Minimum erreicht, d.h. bis eine weitere Variation der Korrekturparameter a und c keine Reduzierung der durch das Abstandsmaß definierten Abweichung mehr bewirkt. Falls die durch das Abstandsmaß definierte Abweichung, die das korrigierte Intensitätsspektrum von dem Referenzspektrum aufweist, beim Anpassen minimiert wird, wird das angepasste korrigierte Intensitätsspektrum S'(λ)= c* + a*·S(λ) verwendet, dessen Abweichung von dem Referenzspektrum R(λ) minimal ist. Das Anpassen kann aber auch beendet werden, falls die durch das Abstandsmaß definierte Abweichung geringer ist als ein bestimmter Schwellenwert.

Durch das Anpassen des korrigierten Intensitätsspektrums an das Referenzspektrum und die Verwendung des an das Referenzspektrum angepassten korrigierten Intensitätsspektrums S'(λ) = c* + a*·S(λ) zur Berechnung des Abstands, können messtechnisch bedingte Schwankungen, die das Intensitätsspektrum S(λ) bei dessen Aufnahme beeinflusst haben, zumindest teilweise ausgeglichen werden. Dazu gehören z.B. Ungenauigkeiten des Detektionsorts auf dem Wertdokument (z.B. durch Transportschwankungen des Wertdokuments hervorgerufen), die bei inhomogenen spektralen Eigenschaften des Wertdokuments das aufgenommene Intensitätsspektrum verändern können. Wertdokumente mit inakzeptablen Intensitätsspektren können aufgrund des Anpassens zuverlässig von Wertdokumenten mit akzeptablen Intensitätsspektren unterschieden werden.

Beim Anpassen des korrigierten Intensitätsspektrum S(λ) werden der erste und zweite Korrekturparameter a* und c*, für welche die durch das Abstandsmaß definierte Abweichung des angepassten korrigierten Intensitätsspektrums S'(λ)= c* + a*·S(λ) von dem Referenzspektrum R(λ) reduziert bzw. minimal ist, individuell für jedes einzelne zu prüfende Wertdokument ermittelt. Im Gegensatz zu einer nicht-individuellen Anpassung an das Referenzspektrum (die für mehrere aufgenommene Intensitätsspektren dieselben Korrekturparameter c* und a* verwendet) wird damit eine viel bessere Anpassung erreicht. Falls für das zu prüfende Wertdokument mehrere Intensitätsspektren auf Ähnlichkeit zu dem Referenzspektrum überprüft werden sollen, kann das Anpassen auch individuell für jedes einzelne Intensitätsspektrum S(λ) des zu prüfenden Wertdokuments durchgeführt werden.

Das Anpassen des korrigierten Intensitätsspektrums S'(c, a, λ) an das Referenzspektrum R(λ) wird z.B. im Rahmen einer Ausgleichsrechnung durchgeführt, die einem Anfitten des korrigierten Intensitätsspektrum S'(c, a, λ) an das Referenzspektrum R(λ) anhand der Fitparameter a und c entspricht. Die Ausgleichsrechnung ist z.B. ein Least-Squares-Fit des korrigierten Intensitätsspektrum S'(c, a, λ) an das Referenzspektrum R(λ) oder basiert zumindest auf einem solchen. Im Fall eines Least-Squares-Fits wird beim Anpassen als Abweichung die mittlere quadratische Abweichung des korrigierten Intensitätsspektrums von dem Referenzspektrum berechnet. Der Least-Squares-Fit ist vorteilhaft, da dieser wenig Rechenzeit erfordert und daher, sogar während einer Hochgeschwindigkeitsprüfung der Wertdokumente, für jedes geprüfte Wertdokument eine Ähnlichkeitsbeurteilung in Echtzeit ermöglicht.

Für die Berechung der durch das Abstandsmaß definierten Abweichung im Rahmen der Anpassung einerseits und die Berechnung des (für die Ähnlichkeitsbeurteilung verwendeten) Abstands des angepassten korrigierten Intensitätsspektrums S'(λ) = c* + a*·S(λ) von dem Referenzspektrum R(λ) andererseits, kann das gleiche Abstandsmaß verwendet werden. Als Abstand für die Ähnlichkeitsbeurteilung wird jedoch bevorzugt der Chessboard-Abstand ||S(λ) - R(λ)||_{∞} des angepassten korrigierten Intensitätsspektrums S'(λ) = c* + a*·S( λ) von dem Referenzspektrum R(λ) verwendet, der die maximale Differenz zwischen S'(λ) = c* + a*·S(λ) und R(λ) darstellt, die bei irgendeiner der betrachteten Wellenlängen λ zwischen den beiden Intensitätsspektren vorliegt.

Der berechnete Abstand wird z.B. als Ähnlichkeitsmaß verwendet, das eine quantitative Angabe der Ähnlichkeit des aufgenommenen Intensitätsspektrums zu dem Referenzspektrum ermöglicht. Zur Beurteilung der Ähnlichkeit zwischen dem von dem Wertdokument aufgenommenen Intensitätsspektrum S(λ) und dem Referenzspektrum R(λ) kann der berechnete Abstand mit einem oder mehreren Schwellenwerten verglichen werden. Wenn der Abstand für einen oder mehrere Detektionsorte auf Wertdokument den Schwellenwert überschreitet, wird dem geprüften Wertdokument ein entsprechend geringer Ähnlichkeitsgrad zugeordnet und das Wertdokument gegebenenfalls aussortiert.

Die Beurteilung der Ähnlichkeit zwischen dem aufgenommenen Intensitätsspektrum des Wertdokuments und dem Referenzspektrum wird z.B. im Rahmen der Qualitätsprüfung der Wertdokumente vor deren Auslieferung durchgeführt. Durch das erfindungsgemäße Verfahren kann eine spektrale Charakteristik eines Sicherheitsmerkmals des Wertdokuments auf ihre Ähnlichkeit zu einem für das Sicherheitsmerkmal spezifizierte spektrale Charakteristik geprüft werden, mit welcher das Sicherheitsmerkmal vor dessen Aufbringung bzw. Einbringung in das Wertdokument spezifiziert wurde. Der Abstand kann dabei als Ähnlichkeitsmaß zur Qualitätsprüfung des Sicherheitsmerkmals verwendet werden. Das Sicherheitsmerkmal, dessen spektrale Charakteristik geprüft wird, ist z.B. eine spezielle auf das Wertdokument aufgebrachte Druckfarbe, die durch eine spezifizierte spektrale Charakteristik gekennzeichnet ist. Dabei ist es besonders vorteilhaft, als Abstand den Chessboard-Abstand zu verwenden, da dieser direkt mit der Schwankungsbreite verglichen werden kann, mit welcher das Sicherheitsmerkmal, insbesondere die Druckfarbe, spezifiziert wurde, bevor das Wertdokument mit dem Sicherheitsmerkmal ausgestattet wurde.

Das Anpassen des korrigierten Intensitätsspektrums S'(c, a, λ) an das Referenzspektrum R(λ) kann für den gesamten Spektralbereich des aufgenommenen Intensitätsspektrums durchgeführt werden oder für einen oder für mehrere spektrale Abschnitte desselben. Beim Anpassen kann auch die durch das Abstandsmaß definierte Abweichung berechnet werden, die das korrigierte Intensitätsspektrum von dem Referenzspektrum gemittelt über mehrere, spektral voneinander getrennte Spektralbereiche aufweist. Eine optimale Anpassung wird erreicht, wenn das Anpassen für einen spektralen Abschnitt durchgeführt wird, der die spektrale Charakteristik des Sicherheitsmerkmals vollständig umfasst und der sich über den spektralen Abschnitt, in dem die spektrale Charakteristik liegt, hinaus erstreckt. Falls die spektrale Charakteristik im Infraroten liegt, wird das korrigierte Intensitätsspektrum bevorzugt in einem spektralen Abschnitt des aufgenommenen Intensitätsspektrums an das Referenzspektrum angepasst, der vollständig im Infraroten liegt, wobei ein gegebenenfalls im Sichtbaren liegender spektraler Abschnitt des aufgenommenen Intensitätsspektrums beim Anpassen nicht berücksichtigt wird. Der spektrale Abschnitt im Infraroten, für den das Anpassen durchgeführt wird, umfasst bevorzugt nur Wellenlängen über 800 nm. Durch das Anpassen nur im Infraroten wird erreicht, dass das gleiche Referenzspektrum für mehrere sichtbare Druckfarben, die jeweils dasselbe Sicherheitsmerkmal enthalten, verwendbar ist. Der Aufwand, der durch eine Handhabung individueller Referenzspektren für jede einzelne Art der Wertdokumente entstehen würde, kann dadurch vermieden werden.

Der zur Beurteilung der Ähnlichkeit verwendete Abstand des angepassten korrigierten Intensitätsspektrums von dem Referenzspektrum wird bevorzugt nur für den spektralen Abschnitt berechnet, für den das korrigierte Intensitätsspektrum an das Referenzspektrum angepasst wurde, oder für einen Teilabschnitt desselben. Insbesondere wird der Abstand nur für einen spektralen Abschnitt des angepassten korrigierten Intensitätsspektrums berechnet, über den sich die spektrale Charakteristik des zu prüfenden Sicherheitsmerkmals des Wertdokuments erstreckt. Dieser liegt vorzugsweise vollständig im Infraroten.

Um das angepasste korrigierte Intensitätsspektrum S'(λ) im Vergleich zu dem aufgenommenen Intensitätsspektrum S(λ) nicht zu verfälschen, kann ein beschränktes Anpassen des korrigierten Intensitätsspektrums an das Referenzspektrum R(λ) durchgeführt werden. Damit beim Anpassen ein Verfälschen des Intensitätsspektrums ausgeschlossen wird, werden für den ersten und zweiten Korrekturparameter bestimmte Bedingungen vorgegeben. Um ein beschränktes Anpassen zu erreichen, werden z.B. für zwei von dem ersten und zweiten Korrekturparameter a*, c* abgeleitete Parameter w=1/(a*+c*) und s=a*/(a*+c*) eine oder mehrere bestimmte Nebenbedingungen vorgegeben. Eine mögliche Nebenbedingung ist, dass die abgeleiteten Parameter w, s so voneinander abhängig sind, dass sie einen bestimmten mathematischen Zusammenhang erfüllen. Das Anpassen kann aber auch durch die Nebenbedingung beschränkt werden, dass die Parameter w, s jeweils innerhalb bestimmter Grenzen liegen, insbesondere dass w in einem um 1 liegenden Wertebereich [w₁, w₂] und s in einem um 1 liegenden Wertebereich [s₁, s₂] liegt, wobei bevorzugt 0,8<w₁<1, 1<w₂<1,2, 0,8<s₁<1, 1<s₂<1,2 gilt. Die Wertebereiche für w und s können in bestimmten Fällen aber auch nicht um 1 liegen, sondern um größeren oder kleineren Zahlenwert. Die Beschränkung ist vorteilhaft, falls das erfindungsgemäße Verfahren irrtümlicherweise für andere Wertdokumente angewendet wird, für welche das bei dem Verfahren zugrunde gelegte Referenzspektrum R(λ) nicht gültig ist. Denn die Intensitätsspektren solcher Wertdokumente könnten ansonsten durch das (unbeschränkte) Anpassen verfälscht werden.

Durch das beschränkte Anpassen wird erreicht, dass die spektrale Form des aufgenommenen Intensitätsspektrums S(λ), insbesondere dessen spektrale Charakteristik, beim Anpassen im Wesentlichen erhalten bleibt. Das angepasste korrigierte Intensitätsspektrum hat daher im Wesentlichen die gleiche spektrale Charakteristik wie das aufgenommene Intensitätsspektrum. Das beschränkte Anpassen führt allenfalls zu einer leichten Verschiebung und/oder Streckung des aufgenommenen Intensitätsspektrums.

Zum beschränkten Anpassen des korrigierten Intensitätsspektrums S'(c, a, λ) an das Referenzspektrum R(λ) werden zum Beispiel, nach dem Schritt des Anpassens, folgende Schritte durchgeführt:
- Bestimmen des ersten Korrekturparameters c* und des zweiten Korrekturparameters a* des angepassten korrigierten Intensitätsspektrums S'(λ), für welche die durch das Abstandsmaß definierte Abweichung des angepassten korrigierten Intensitätsspektrums S'(λ) von dem Referenzspektrum R(λ) reduziert bzw. minimal ist,
- Berechnen des Parameters w=1/(a*+c*) und des Parameters s=a*/(a*+c*),
- Prüfen, ob der Parameter w in einem vorbestimmten Intervall [w₁, w_{2]} um 1 liegt und ob der Parameter s in einem vorbestimmten Intervall [s₁, s₂] um 1 liegt,
- Beschränken des Parameters w auf w₁, falls w<w₁, und auf w₂, falls w>w₂, und Beschränken des Parameters s auf s₁, falls s<s₁, und auf s₂, falls s>s₂,
- Verwenden des beschränkten Parameters w=w₁ bzw. w=w₂ und/ oder des beschränkten Parameters s=s₁ bzw. s=s₂ zum Bestimmen, eines beschränkt angepassten korrigierten Intensitätsspektrums S_{B}'(λ) = c* + a*·S(λ), dessen erster Korrekturparameter c*=(1-s)/w und dessen zweiter Korrekturparameter a*=s/w ist,
- Berechnen eines Abstands (A), den das beschränkt angepasste korrigierte Intensitätsspektrum S_{B}'(λ) von dem Referenzspektrum R(λ) aufweist,
- Verwenden des berechneten Abstands (A) zur Beurteilung der Ähnlichkeit zwischen dem von dem Wertdokument aufgenommenen Intensitätsspektrum S'(λ) und dem Referenzspektrum R(λ).

Die Erfindung betrifft außerdem einen Sensor, der zur Durchführung des Verfahrens ausgebildet ist. Der Sensor nimmt das Intensitätsspektrum des zu prüfenden Wertdokuments auf. Dazu weist der Sensor Messelemente zur spektral aufgelösten Detektion des von dem zu prüfenden Wertdokument ausgehenden Lichts auf, z.B. eine oder mehrere, gegebenenfalls spektral verschiedene, Lichtquellen, gegebenenfalls eines oder mehrere dispersive Elemente sowie eine oder mehrere Detektionseinrichtungen. Der Sensor ist außerdem mit einer Auswerteeinrichtung ausgestattet, welche die Schritte des erfindungsgemäßen Verfahrens auf das aufgenommene Intensitätsspektrum des Wertdokuments anwendet. Zur Ausführung dieser Schritte ist der Sensor mit entsprechender Hardware ausgestattet und/ oder mit einer entsprechenden Software programmiert. Der Sensor ist z.B. in eine Vorrichtung zur Prüfung von Wertdokumenten eingebaut, die ein Transportsystem aufweist, durch welches die zu prüfenden Wertdokumente einzeln nacheinander an dem Sensor, der die Wertdokumente prüft, vorbeitransportiert werden.

Vor Beginn des erfindungsgemäßen Verfahrens kann das für dieses Wertdokument jeweils passende Referenzspektrum manuell oder automatisch ausgewählt werden, etwa durch entsprechende Einstellung an der Vorrichtung oder an dem Sensor, der das Verfahren ausführt. Das ausgewählte Referenzspektrum kann für verschiedene Arten von Wertdokumenten gültig sein. Die Information, welches das passende Referenzspektrum des Wertdokuments ist, kann auch durch eine automatische Erkennung des Wertdokuments gewonnen werden, z.B. anhand von Messungen an dem Wertdokument, die online zum erfindungsgemäßen Verfahren durchgeführt werden.

Nachfolgend wird die Erfindung beispielhaft anhand der folgenden Figuren erläutert. Es zeigen:
- Fig. 1a: Beispiele aufgenommener Intensitätsspektren S(λ), Z(λ) im Vergleich zu einem Referenzspektrum R(λ) mit dem Akzeptanzintervall R(λ)+/-ΔR,
- Fig. 1b: Beispiele aufgenommener Intensitätsspektren Sᵢ(λ) einer Vielzahl von Wertdokumenten im Vergleich zum Referenzspektrum R(λ) mit dem Akzeptanzintervall R(λ)+/-ΔR,
- Fig. 2a: Das Intensitätsspektrum S(λ) aus Fig. 1a und das an das Referenzspektrum R(λ) angepasste korrigierte Intensitätsspektrum S'(λ), dessen Abweichung zum Referenzspektrum R(λ) minimal ist,
- Fig. 2b: Die an das Referenzspektrum R(λ) angepassten korrigierten Intensitätsspektren Si'(λ) aus Fig. 1b im Vergleich zum Akzeptanzintervall R(λ)+/-ΔR um das Referenzspektrum R(λ) und im Vergleich zu einem reduzierten Akzeptanzintervall R(λ)+/-δR,
- Fig. 2c: Die Intensitätsspektren Z(λ), Z'(λ) im Vergleich zum Akzeptanzintervall R(λ)+/-ΔR um das Referenzspektrum R(λ) und im Vergleich zum reduzierten Akzeptanzintervall R(λ)+/-δR,
- Fig. 3a: Beim Anpassen verschiedener Intensitätsspektren ermittelte Parameter s und w und deren Beschränkung auf das Intervall [s₁, s₂] und [w₁, w₂],
- Fig. 3b: Beispiel für die beschränkte Anpassung eines Intensitätsspektrums Y(λ).

Das erfindungsgemäße Verfahren ist allgemein zur Überprüfung der Ähnlichkeit von Intensitätsspektren einsetzbar. Das Intensitätsspektrum, dessen Ähnlichkeit zu einem Referenzspektrum geprüft wird, ist z.B. ein Remissionsspektrum, Transmissionsspektrum oder Lumineszenzspektrum des Wertdokuments. Eine solche Ähnlichkeits-Überprüfung kann z.B. zur Echtheitsprüfung, zur Prüfung des Zustands oder der Art oder anderer Eigenschaften des Wertdokuments eingesetzt werden. Im Folgenden wird das erfindungsgemäße Verfahren am Beispiel der Qualitätsprüfung von Wertdokumenten beschrieben, die nach ihrer Herstellung auf das Vorhandensein eines Sicherheitsmerkmals geprüft werden sollen. Dabei wird geprüft, ob das Intensitätsspektrum des jeweiligen Wertdokuments eine ausreichende Ähnlichkeit zu einer bestimmten spektralen Charakteristik aufweist.

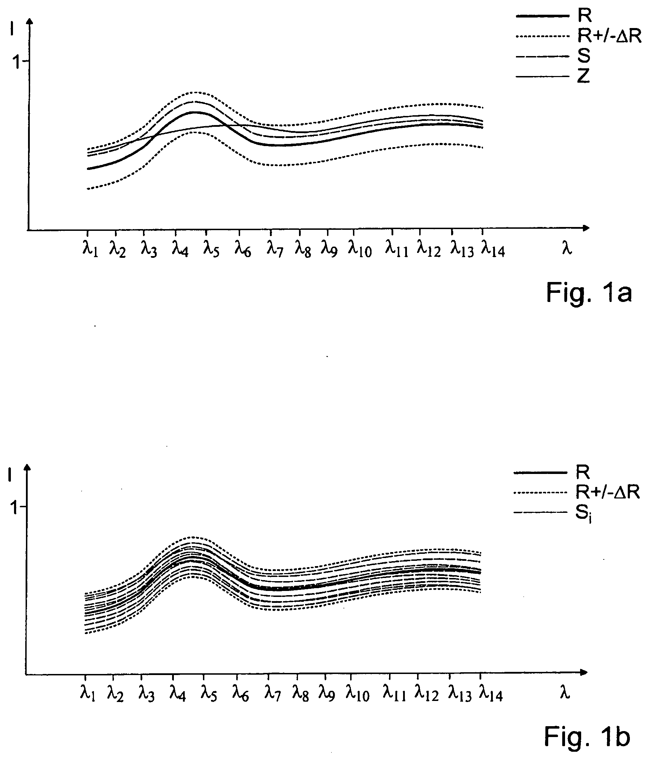

In Figur 1a ist als Intensitätsspektrum S(λ) das Remissionsspektrum eines zu prüfenden Wertdokuments gezeigt, das durch Detektieren von Licht des Wertdokuments bei verschiedenen Wellenlängen aufgenommen wurde. Das Intensitätsspektrum kann ein kontinuierliches Intensitätsspektrum sein, das durch spektral aufgelöstes Detektieren des von dem Wertdokument ausgehenden Lichts im Bereich λ₁ bis λ₁₄ erhalten wurde. Alternativ kann das Intensitätsspektrum aber auch aus einzelnen diskreten Intensitätswerten, z.B. bei den Wellenlängen λ₁ bis λ₁₄ gebildet sein, vgl. Figur 1a. Ferner kann das Intensitätsspektrum von einem bestimmten Detektionsort auf dem Wertdokument aufgenommen sein oder ein über mehrere Detektionsorte innerhalb eines bestimmten Bereichs (ROI) auf dem Wertdokument gemitteltes Intensitätsspektrum sein. Das Intensitätsspektrum kann aus den absoluten Intensitätswerten, z.B. aus den von einem Detektor bei verschiedenen Wellenlängen detektierten Intensitäten bestehen, gegebenenfalls nach einer Korrektur aufgrund der spektralen Empfindlichkeit des Detektors und gegebenenfalls bezogen auf die eingestrahlte Lichtintensität, mit der das Wertdokument beleuchtet wird. In dem folgenden Beispiel werden jedoch Intensitätsspektren aus relativen Intensitätswerten betrachtet, d.h. die bei verschiedenen Wellenlängen detektierten Intensitäten wurden auf eine Bezugsintensität des Wertdokuments (z.B. eine im Weißfeld des Wertdokuments detektierte Intensität) bezogen, z.B. durch Bildung des Verhältnisses zu der Bezugsintensität.

In Figur 1a ist außerdem ein Referenzspektrum R(λ) gezeigt, mit dem das aufgenommene Intensitätsspektrum S(λ) verglichen werden soll. Als Referenzspektrum wird z.B. ein Sollspektrum verwendet, welches im Idealfall von dem Wertdokument erwartet wird. Das Referenzspektrum R(λ) ist z.B. ein für den jeweiligen Detektionsort oder ROI-Bereich spezifisches Referenzspektrum oder ein für das Wertdokument insgesamt erwartetes Referenzspektrum. Der Vergleich mit dem Referenzspektrum R(λ) erfolgt durch Überprüfen, ob das aufgenommene Intensitätsspektrum S(λ) in einem Akzeptanzbereich um das Referenzspektrum R(λ) liegt. Dazu sind in Figur 1a die Grenzen eines möglichen Akzeptanzbereichs eingezeichnet, die in diesem Beispiel durch zwei zum Referenzspektrum R(λ) parallel verschobene Spektren R(λ)+ΔR und R(λ)-ΔR in einem festen Abstand ΔR oberhalb und unterhalb des Referenzspektrums R(λ) gegeben sind. Die Überprüfung, ob das Intensitätsspektrum S(λ) im Akzeptanzbereich R(λ)+/-ΔR liegt, wird z.B. im Rahmen einer Qualitätsprüfung der Wertdokumente durchgeführt. Das Wertdokument mit dem Intensitätsspektrum S'(λ) würde bei der Qualitätsprüfung akzeptiert werden, da dieses innerhalb des Akzeptanzbereichs liegt.

Figur 1b zeigt eine Vielzahl von Intensitätsspektren Sᵢ(λ), (mit i=1, 2, ...n), welche von einer Vielzahl n verschiedener Wertdokumente aufgenommen wurden. Für diese n Wertdokumente wird auch eine dem Referenzspektrum entsprechende spektrale Charakteristik erwartet. Im Hinblick auf eine Qualitätsprüfung anhand des Akzeptanzbereichs R(λ)+/-ΔR zeigen alle diese n Wertdokumente eine akzeptable spektrale Charakteristik. Die einzelnen Intensitätsspektren Sᵢ(λ) unterscheiden sich aber voneinander aufgrund verschiedener Gründe:
- Erstens weichen die spektralen Eigenschaften der zu prüfenden Wertdokumente aufgrund unvermeidlicher Schwankungen bei der Herstellung der Wertdokumente geringfügig voneinander ab. Im Rahmen der Qualitätsprüfung sollen diese Schwankungen überprüft werden.
- Zweitens ergeben sich aber auch messtechnisch bedingt spektrale Unterschiede der Intensitätsspektren Sᵢ(λ) der verschiedenen Wertdokumente. Üblicherweise variieren die spektralen Eigenschaften eines Wertdokuments in Abhängigkeit des Detektionsorts auf dem Wertdokument, z.B. aufgrund von lokal, nur in bestimmten Bereichen des Wertdokuments aufgebrachten Farben oder Sicherheitsmerkmalen oder aufgrund des Druckdesigns, durch das ein inhomogener Flächenauftrag oder eine inhomogene Flächendeckung der aufgedruckten Farbe vorliegt. Falls nun der tatsächliche Detektionsort auf dem jeweiligen Wertdokument, an dem das Intensitätsspektrum aufgenommen wird, nicht genau mit dem Soll-Detektionsort übereinstimmt, für den das Referenzspektrum gilt, so kann dies - aufgrund der lokal variierenden spektralen Eigenschaften des Wertdokuments - zu Abweichungen des aufgenommenen Intensitätsspektrums vom Referenzspektrum führen. Derartige Schwankungen des Detektionsorts treten z.B. aufgrund einer Positionierungenauigkeit des Wertdokuments auf oder aufgrund von Transportschwankungen des Wertdokuments, wenn das Wertdokument zu seiner Prüfung mit Hilfe eines Transportsystems an einem Sensor vorbeitransportiert wird, der das Intensitätsspektrum aufnimmt. Bei den Intensitätsspektren Sᵢ(λ) der Figur 1b sind vor allem die Schwankungen des Detektionsorts für die Abweichungen der Intensitätsspektren Sᵢ(λ) vom Referenzspektrum R(λ) verantwortlich.
- Drittens können die Intensitätsspektren der geprüften Wertdokumente auch aufgrund der Relativmessung der detektierten Intensitäten variieren, wenn die am Detektionsort detektierte Intensität auf die im Bezugsbereich des jeweiligen Wertdokuments detektierte Intensität bezogen wird. Wenn sich die Bezugsbereiche der geprüften Wertdokumente in ihrer Opazität voneinander unterscheiden, eine Verschmutzung aufweisen oder wenn in den Bezugsbereichen verschiedener Wertdokumente verschiedene Wasserzeichen vorhanden sind, führt dies zu geringfügigen Schwankungen der Bezugsintensität, die ebenfalls zu einer Veränderung der aufgenommenen Intensitätsspektren führt.

Da die Intensitätsspektren Sᵢ(λ) aller n Wertdokumente eine akzeptable spektrale Charakteristik haben, sollten alle diese n Wertdokumente bei der Qualitätsprüfung akzeptiert werden. Demzufolge wurde der Akzeptanzbereich R(λ)+/-ΔR so groß gewählt, dass diese n Wertdokumente bei der Qualitätsprüfung nicht zurückgewiesen werden. Der große Akzeptanzbereich R(λ)+/-ΔR führt jedoch andererseits dazu, dass bei der Qualitätsprüfung auch Wertdokumente mit inakzeptablem Intensitätsspektrum, wie z.B. das Intensitätsspektrum Z(λ) aus Figur 1a, akzeptiert werden würden. Das Intensitätsspektrum Z(λ) wurde von einem anderen Wertdokument aufgenommen, das zwar eine dem Referenzspektrum R(λ) entsprechende spektrale Charakteristik aufweisen sollte, aber bei dessen Herstellung ein Fehler passiert ist. Aufgrund des Fehlers zeigt das Spektrum Z(λ) eine andere spektrale Charakteristik als das Referenzspektrum R(λ) und als das Intensitätsspektrum S(λ). Da das Spektrum Z(λ) des anderen Wertdokuments jedoch trotzdem innerhalb des Akzeptanzbereichs R(λ)+/-ΔR liegt, würde auch das andere Wertdokument akzeptiert werden.

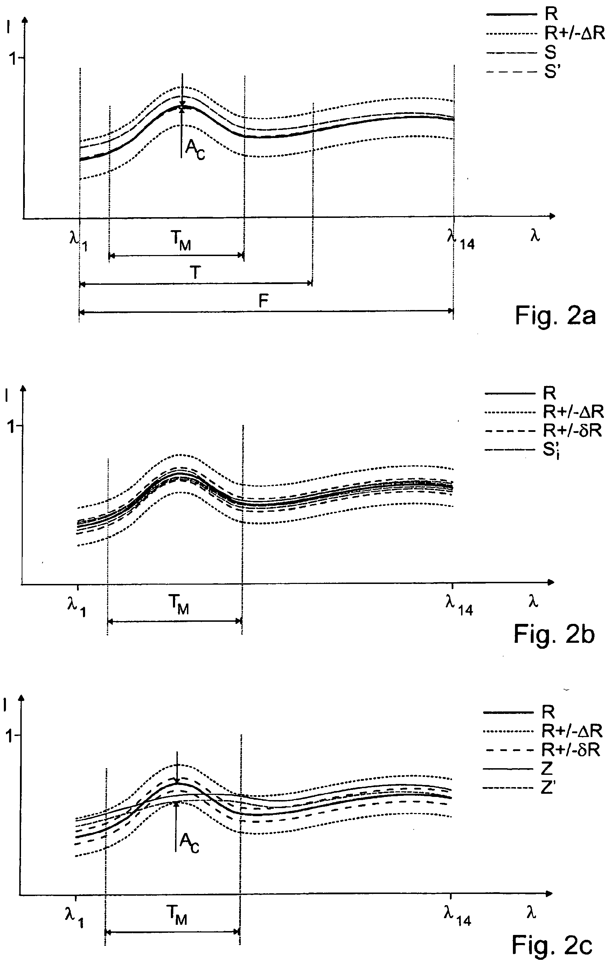

In Figur 2a ist das erfindungsgemäße Verfahren am Beispiel des Intensitätsspektrums S(λ) veranschaulicht. Das Intensitätsspektrum S(λ) wird dabei mit Hilfe einer linearen Korrektur an das Referenzspektrum R(λ) angepasst. Zu diesem Zweck wird zunächst aus dem Intensitätsspektrum S(λ) ein korrigiertes Intensitätsspektrums S'(c, a, λ) = c + a·S(λ) berechnet, das die lineare Transformierte des aufgenommenen Intensitätsspektrums S(λ) ist und das von dem ersten Korrekturparameter c und von dem zweiten Korrekturparameter a abhängt, die unabhängig von der Wellenlänge λ sind. Durch eine Ausgleichsrechnung, z.B. einen Least-Squares-Fit, werden die zwei Korrekturparameter c*, a* ermittelt, für welche die Abweichung des linear korrigierten Intensitätsspektrums von dem Referenzspektrum (die durch das gewählte Abstandsmaß definiert ist) minimal ist.

Die Ausgleichsrechnung kann auch iterativ durchgeführt werden. Für den ersten Korrekturparameter c und den zweiten Korrekturparameter a werden dann zunächst Startwerte c₀ und a₀ eingesetzt, z.B. c₀=0 und a₀=1. Ausgehend von c₀ und a₀ werden c und a iterativ variiert, jeweils das zugehörige korrigierte Intensitätsspektrums S'(c, a, λ) = c + a·S(λ) bestimmt und jeweils die durch das gewählte Abstandsmaß definierte Abweichung dieses korrigierten Intensitätsspektrums S'(λ) = c + a·S(λ) von dem Referenzspektrum R(λ) berechnet. Die Korrekturparameter c und a werden solange variiert, bis die durch das Abstandsmaß definierte Abweichung des korrigierten Intensitätsspektrums S'(λ) = c + a·S(λ) von dem Referenzspektrum R(λ) ein Minimum erreicht. Das Ergebnis dieser Anpassung ist ein bestimmtes linear korrigiertes Intensitätsspektrum S'(λ) = c* + a*·S(λ) mit den Korrekturparametern c* und a*, für welche das korrigierte Intensitätsspektrum S'(λ) am wenigsten von dem Referenzspektrum R(λ) abweicht.

Ausgehend von dem aufgenommenen Intensitätsspektrum S(λ) ergibt sich so das angepasste korrigierte Intensitätsspektrum S'(λ) aus Figur 2a, das mit Hilfe der Ausgleichsrechnung an das Referenzspektrum R(λ) angepasst wurde. Durch das Anpassen des Intensitätsspektrums S(λ) an das Referenzspektrum R(λ) wird erreicht, dass Variationen des Detektionsorts oder der Bezugsintensitäten, die für das jeweils geprüfte Wertdokument nicht genau vorhersagbar sind oder die für die Auswertung nicht zur Verfügung stehen, zumindest teilweise ausgeglichen werden.

Das korrigierte Intensitätsspektrum S'(λ) wird in einem bestimmten Spektralbereich F an das Referenzspektrum R(λ) angepasst. Für die Anpassung des korrigierten Intensitätsspektrum S'(λ) an das Referenzspektrum R(λ) werden nur Intensitätswerte berücksichtigt, die bei Wellenlängen des Spektralbereichs F detektiert wurden, während die außerhalb des Spektralbereichs F detektierten Intensitätswerte unberücksichtigt bleiben. Das heißt es wird die durch das Abstandsmaß definierte Abweichung der innerhalb des Spektralbereichs F detektierten Intensitätswerte von dem Referenzspektrum minimiert.

Figur 2b zeigt das Ergebnis der Anpassung für die Vielzahl der Intensitätsspektren Sᵢ(λ) aus Figur 1b. Jedes der Intensitätsspektren Sᵢ(λ) wurde einzeln mit Hilfe der linearen Korrektur an das Referenzspektrum R(λ) angepasst, wobei die Korrekturparameter c*, a* für die einzelnen Anpassungen im Allgemeinen verschiedene Werte annehmen. Daraus resultieren die in Figur 2b dargestellten korrigierten Intensitätsspektren S'ᵢ(λ). Die korrigierten Intensitätsspektren S'ᵢ(λ) weichen aufgrund der Anpassung deutlich weniger von dem Referenzspektrum R(λ) ab. Denn die Variation des Detektionsorts bzw. der Bezugsintensitäten, die die Schwankungen der Intensitätsspektren Sᵢ(λ) aus Figur 1b bewirkt hat, wurde durch die Anpassung stark reduziert bzw. ausgeglichen. Aufgrund der Anpassung kann für die Qualitätsprüfung der Wertdokumente daher ein deutlich kleinerer Akzeptanzbereich R(λ)+/-δR verwendet werden. Für alle n Wertdokumente liegt das angepasste Intensitätsspektrum S'ᵢ(λ) in diesem Akzeptanzbereich R(λ)+/-δR.

Auch das Intensitätsspektrum eines Wertdokuments mit inakzeptabler Qualität, wie z.B. Intensitätsspektrum Z(λ) aus Figur 1a, wird durch die Anpassung an das Referenzspektrum R(λ) angenähert. Allerdings führt die Anpassung in diesem Fall nur zu einer Annäherung, aber nicht zu einer derart guten Übereinstimmung mit dem Referenzspektrum wie bei den Intensitätsspektren Sᵢ(λ). Ein an das Referenzspektrum R(λ) angepasstes Intensitätsspektrum Z'(λ) würde daher, trotz der Anpassung, die Grenzen des reduzierten Akzeptanzbereichs R(λ)+/-δR überschreiten, vgl. Figur 2c. Das Wertdokument mit dem inakzeptablem Intensitätsspektrum Z(λ) kann also zuverlässig von den Wertdokumenten mit den akzeptablen Intensitätsspektren S(λ) und Sᵢ(λ) unterschieden werden.

Für die Prüfung der Wertdokumente wird eine quantitative Beurteilung der Ähnlichkeit zwischen dem von dem Wertdokument aufgenommenen Intensitätsspektrum S(λ) und dem Referenzspektrum R(λ) durchgeführt. Als Ähnlichkeitsmaß kann zu diesem Zweck der Abstand berechnet werden, den das an das Referenzspektrum R(λ) angepasste korrigierte Intensitätsspektrum S'(λ) von dem Referenzspektrum R(λ) aufweist. Für die Qualitätsprüfung wird der Abstand Ac berechnet, den das an das Referenzspektrum R(λ) angepasste korrigierte Intensitätsspektrum 5'(λ) von dem Referenzspektrum R(λ) in einem bestimmten Spektralbereich aufweist. Dieser Spektralbereich kann der Spektralbereich F sein, für den auch die Anpassung des korrigierten Intensitätsspektrums S'(λ) an das Referenzspektrum R(λ) durchgeführt wurde. Alternativ kann der Abstand Ac aber auch für einen Teilabschnitt T des Spektralbereichs F berechnet werden, vgl. Figur 2a. Falls die Qualitätsprüfung die Qualität einer Farbe oder ein Sicherheitsmerkmal mit einer bestimmten spektralen Charakteristik prüfen soll, wird der Abstand Ac für den Teilabschnitt berechnet, in dem die spektrale Charakteristik liegen sollte, z.B. für den Teilabschnitt T_{M} aus Figur 2a.

Der berechnete Abstand Ac kann direkt zur Qualitätsprüfung der Wertdokumente verwendet werden. Zu diesem Zweck kann der Abstand Ac z.B. mit einer Schwelle verglichen werden, bei deren Überschreiten dem Wertdokument eine inakzeptable Qualität zugeordnet wird. Liegt der berechnete Abstand Ac unterhalb einer bestimmten Schwelle, so wird dem Wertdokument eine akzeptable Qualität zugeordnet. Der berechnete Abstand Ac kann aber auch als eines von mehreren Qualitätskriterien, in Verbindung mit anderen Qualitätskriterien berücksichtigt werden. Die Qualität des Wertdokuments wird z.B. nur dann als akzeptabel bewertet, falls mehrere der Qualitätskriterien gleichzeitig erfüllt sind.

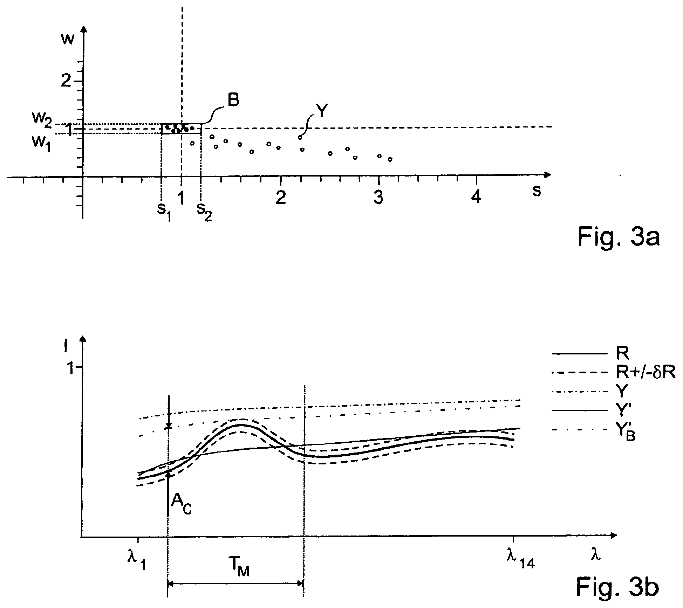

Als Abstandsmaß wird der Chessboard-Abstand Ac = ||S'(λ) - R(λ)||_{∞} verwendet. Dieser entspricht dem größten Intensitätsunterschied |c* + a*·S(λ) - R(λ)| zwischen dem Intensitätsspektrum S'(λ) und dem Referenzspektrum R(λ), der bei irgendeiner der Wellenlängen λ des betrachteten Spektralbereichs besteht, vgl. Figuren 2a, 2c, 3b. Der Chessboard-Abstand Ac ist vorteilhaft im Vergleich zu anderen Abstandsmaßen, wie z.B. im Vergleich zum mittleren quadratischen Abstand. Denn der Chessboard-Abstand Ac, den das korrigierte Intensitätsspektrum von dem Referenzspektrum R(λ) aufweist, kann direkt mit der maximalen Schwankungsbreite δR verglichen werden, mit der Farben oder Sicherheitsmerkmale üblicherweise spezifiziert sind. Beträgt der Chessboard-Abstand Ac mehr als die Schwankungsbreite δR, so ist dies gleichbedeutend damit, dass das korrigierte Intensitätsspektrum zumindest bei einer Wellenlänge die Grenzen des im Rahmen der Spezifikation vorgegebenen Akzeptanzbereichs R(λ)+/-δR überschreitet. Da der Chessboard-Abstand Ac also direkt mit der Spezifikation der Farbe oder des Sicherheitsmerkmals korrespondiert, kann mit Hilfe des Chessboard-Abstands Ac auf einfache Weise das Einhalten der Spezifikation nachgeprüft werden. Außerdem ist der Chessboard-Abstand Ac sehr anschaulich für eine Person, die die Ergebnisse der Qualitätsprüfung im Vergleich zur Spezifikation anhand einer graphischen Darstellung des korrigierten Intensitätsspektrums S'(λ) im Vergleich zur oberen Grenze R(λ)+δR und unteren Grenze R(λ)-δR nachvollziehen möchte. Andere Abstandsmaße, wie z.B. der mittlere quadratische Abstand, sind im Vergleich zum Chessboard-Abstand weniger anschaulich, korrespondieren nicht direkt mit den Vorgaben der Spezifikation und sind daher nicht einfach mit einer spezifizierten Schwankungsbreite vergleichbar.

In einer Weiterbildung des Verfahrens kann als Abstandsmaß ein gewichteter Chessboard-Abstand Ac verwendet werden, bei dem ein wellenlängenabhängiger Akzeptanzbereich R(λ)+/-δR(λ) mit wellenlängenabhängiger Breite δR(λ) zugrunde gelegt wird. Der gewichtete Chessboard-Abstand berechnet sich durch Ac=||(S'(λ) - R(λ))/δR(λ)||_{∞}.

Bei dem erfindungsgemäßen Verfahren kann eine beschränkte Anpassung durchgeführt werden, um eine Verfälschung der aufgenommenen Intensitätsspektren durch das Anpassen zu vermeiden. Durch die beschränkte Anpassung bleibt die spektrale Form des aufgenommenen Intensitätsspektrums beim Anpassen an das Referenzspektrum R(λ) erhalten. Das Anpassen wird in diesem Beispiel dadurch beschränkt, dass zwei von dem ersten und zweiten Korrekturparameter a*, c* abgeleitete Parameter s=a*/(a*+c*) und w=1/(a*+c*) die Nebenbedingung erfüllen, dass sie innerhalb bestimmter Grenzen liegen. Falls der Parameter w beim unbeschränkten Anpassen nicht in einem vorbestimmten Intervall [w₁, w₂] um 1 liegt, wird dieser auf w=w1 beschränkt, falls w<w₁, und auf w=w₂, falls w>w₂. Entsprechend wird der Parameter s beschränkt, falls dieser beim unbeschränkten Anpassen nicht in einem vorbestimmten Intervall [s₁, s₂] um 1 liegt, auf s=s₁, falls s<s₁, und auf s=s₂, falls s>s₂. Falls im Rahmen der Anpassung nur minimale Korrekturen durchgeführt werden mussten, nehmen die Parameter die Werte w≈1 und s≈1 ein, so dass die Beschränkung keine Auswirkungen auf das angepasste korrigierte Intensitätsspektrum hat.

Figur 3a zeigt ein Beispiel für den Wertebereich B, auf den die Parameter s und w beschränkt werden können, wobei in diesem Beispiel für s ein Wertebereich von 0,8 bis 1,2 und für w ein Wertebereich von 0,9 bis 1,1 vorgegeben wird. Durch Beschränkung der Parameter s, w wird eine zu starke Korrektur der Bezugsintensität vermieden, die der Relativmessung der Intensität zugrunde liegt, und eine zu starke Korrektur der spektralen Veränderung, die durch die Schwankungen des Detektionsorts auftritt. Durch die Beschränkung der Wertepaare (s, w) auf den Bereich B wird erreicht, dass nur physikalisch gerechtfertigte Einflüsse korrigiert werden, die das Intensitätsspektrum (geringfügig) verändern. Das beschränkte Anpassen gewährleistet, dass die spektrale Form des korrigierten Intensitätsspektrums der des jeweils aufgenommenen Intensitätsspektrums entspricht.

Im Diagramm der Figur 3a sind Wertepaare (s, w) der beiden Parameter s und w für eine Vielzahl von Wertdokumenten aufgetragen, wobei jedes Wertepaar (s, w) individuell durch (unbeschränktes) Anpassen des aufgenommenen Intensitätsspektrums eines Wertdokuments an das Referenzspektrum R(λ) ermittelt wurde. Für Wertdokumente, die eine akzeptable spektrale Charakteristik aufweisen, wurden Wertepaare (s, w) ermittelt, die innerhalb des Wertebereichs B liegen (schwarze Punkte in Figur 3a). Dazu gehören z.B. die Wertdokumente 1 bis n mit den Intensitätsspektren Sᵢ(λ), wobei i=1,2,...n. Die außerhalb des Wertebereichs B liegenden Wertepaare (s, w) wurden für Wertdokumente ermittelt, die das charakteristische Spektrum nicht aufweisen (Ringe in Figur 3a). Deren Parameter s und w weichen so stark von (s, w) = (1,1) ab, dass sie die Grenzen des Wertebereichs B überschreiten und daher durch die Beschränkung limitiert werden. Beispielsweise wurden bei der (unbeschränkten) Anpassung eines aufgenommenen Intensitätsspektrums Y(λ) eines weiteren Wertdokuments die Parameter s_{Y}=2,2, w_{Y}=0,8 ermittelt. An Stelle der Parameter (s_{Y}, w_{Y}) =(2,2, 0,8), die das unbeschränkte Anpassen des aufgenommenen Intensitätsspektrums Y(λ) an das Referenzspektrum R(λ) ergeben hat, werden die Parameter auf (s_{Y}, w_{Y}) = (s₂, w₁) beschränkt. Aus dem so beschränkten Parameter s_{Y}=s₂ und w_{Y}=w₁ wird ein beschränkt angepasstes korrigiertes Intensitätsspektrum Y_{B}(λ)= c* + a*·Y(λ) bestimmt, dessen erster Korrekturparameter c*=(1-s₂)/w₁ und dessen zweiter Korrekturparameter a*=s₂/w₁ ist. Im Beispiel der Figur 3a werden (s_{Y}, w_{Y}) auf (s₂, w₁)= (1,2,0,9) beschränkt.

Figur 3b zeigt das aufgenommene Intensitätsspektrum Y(λ) des weiteren Wertdokuments, bei dessen Herstellung versehentlich zu wenig Farbe verwendet wurde. Durch die Beschränkung von s_{Y} auf 1,2 und w_{Y} auf 0,9 ergibt sich das beschränkt angepasste korrigierte Intensitätsspektrum Y_{B}'(λ). Ohne Beschränkung der Parameter w und s würde das Anpassen des aufgenommenen Intensitätsspektrums Y(λ) an das Referenzspektrum R(λ) zu dem Intensitätsspektrum Y'(λ)=(1-s)/w + s/w·Y(λ) führen, welches eine deutlich geringere Abweichung von dem Referenzspektrum R(λ) aufweist, vgl. Figur 3b. Im Vergleich zum aufgenommenen Intensitätsspektrum Y(λ) ist das Intensitätsspektrum Y'(λ) durch das (unbeschränkte) Anpassen an das Referenzspektrum R(λ) jedoch verfälscht worden. Durch die Beschränkung der Parameter w und s auf den Wertebereich B führt das Anpassen des Spektrums Y(λ) an das Referenzspektrum R(λ) zu dem beschränkt angepassten Intensitätsspektrum Y_{B}'(λ)=(1-S₂)/w₁ + s₂/w₁·Y(λ), das im Wesentlichen dem aufgenommenen Intensitätsspektrums Y(λ) entspricht.

Analog zum Fall ohne Beschränkung, wird auch im Fall einer beschränkten Anpassung der Abstand Ac berechnet, den das beschränkt angepasste korrigierte Intensitätsspektrum Y_{B}'(λ) von dem Referenzspektrum R(λ) aufweist und der berechnete Abstand Ac zur Beurteilung der Ähnlichkeit zwischen dem von dem weiteren Wertdokument aufgenommenen Intensitätsspektrum und dem Referenzspektrum R(λ) verwendet. Im gezeigten Beispiel ist der so ermittelte Abstand Ac des Intensitätsspektrums Y_{B}'(λ) so groß, dass die Grenzen des reduzierten Akzeptanzbereichs R(λ)+/-δR weit überschritten werden, vgl. Figur 3b. Dem weiteren Wertdokument würde daher eine inakzeptable Qualität zugeordnet werden.

## Patentansprüche

1. Verfahren zur Prüfung von Wertdokumenten, mit den Schritten:
- Detektieren des von einem Wertdokument ausgehenden Lichts bei mehreren verschiedenen Wellenlängen (λ₁, λ₂, λ₃, ...) zur Aufnahme eines Intensitätsspektrums S(λ) des Wertdokuments,
- Bilden eines korrigierten Intensitätsspektrums S'(c, a, λ) = c + a·S(λ) durch Korrigieren des aufgenommenen Intensitätsspektrums S'(λ) mit Hilfe einer linearen Korrekturfunktion, so dass das korrigierte Intensitätsspektrum S'(c, a, λ) = c + a·S(λ) eine linear Transformierte des aufgenommenen Intensitätsspektrums S(λ) ist und von einem ersten Korrekturparameter c und einem zweiten Korrekturparameter a abhängt,
- Anpassen des korrigierten Intensitätsspektrums S'(c, a, λ) an das Referenzspektrum R(λ), um eine durch ein Abstandsmaß definierte Abweichung, die das korrigierte Intensitätsspektrum S'(c, a, λ) von dem Referenzspektrum R(λ) aufweist, zu reduzieren, wobei durch das Anpassen ein an das Referenzspektrum R(λ) angepasstes korrigiertes Intensitätsspektrum S'(λ) = c* + a*·S(λ) ermittelt wird, dessen erster Korrekturparameter c einen Wert c* und dessen zweiter Korrekturparameter a einen Wert a* einnehmen,
- Berechnen eines Abstands (A, Ac), den das an das Referenzspektrum R(λ) angepasste korrigierte Intensitätsspektrum S'(λ) =c* + a*·S(λ) von dem Referenzspektrum R(λ) aufweist,
- Verwenden des berechneten Abstands (A, Ac) zur Beurteilung der Ähnlichkeit zwischen dem von dem Wertdokument aufgenommenen Intensitätsspektrum S(λ) und dem Referenzspektrum R(λ).

2. Verfahren nach Anspruch 1, **dadurch gekennzeichnet, dass** der erste und zweite Korrekturparameter a, c durch das Anpassen des linear korrigierten Intensitätsspektrums S'(c, a, λ) an das Referenzspektrum R(λ) ermittelt werden.

3. Verfahren nach einem oder mehreren der vorhergehenden Ansprüche, **dadurch gekennzeichnet, dass** das Anpassen des korrigierten Intensitätsspektrums S'(c, a, λ) an das Referenzspektrum R(λ) individuell für jedes zu prüfende Wertdokument, insbesondere individuell für jedes aufgenommene Intensitätsspektrum S(λ) jedes zu prüfenden Wertdokuments durchgeführt wird.

4. Verfahren nach einem der vorhergehenden Ansprüche, **dadurch gekennzeichnet, dass**, durch das Anpassen des korrigierten Intensitätsspektrums S'(c, a, λ) an das Referenzspektrum R(λ), messtechnisch bedingte Schwankungen, die das aufgenommene Intensitätsspektrum S(λ) bei dessen Aufnahme beeinflusst haben, zumindest teilweise ausgeglichen werden.

5. Verfahren nach einem der vorhergehenden Ansprüche, **dadurch gekennzeichnet, dass** das Anpassen des korrigierten Intensitätsspektrums S'(c, a, λ) an das Referenzspektrum R(λ) im Rahmen einer Ausgleichsrechnung durchgeführt wird, bei der ein Least-Squares-Fit des korrigierten Intensitätsspektrums S'(c, a, λ) an das Referenzspektrum R(λ) durchgeführt wird.

6. Verfahren nach einem der vorhergehenden Ansprüche, **dadurch gekennzeichnet, dass** der Abstand (A), der zwischen dem angepassten korrigierten Intensitätsspektrum S'(λ) und dem Referenzspektrum R(λ) berechnet wird, der Chessboard-Abstand (Ac) des angepassten korrigierten Intensitätsspektrums S'(λ) von dem Referenzspektrum R(λ) ist.

7. Verfahren nach einem der vorhergehenden Ansprüche, **dadurch gekennzeichnet, dass** durch das Verfahren eine spektrale Charakteristik eines Sicherheitsmerkmals des Wertdokuments auf ihre Ähnlichkeit zu einer für das Sicherheitsmerkmal spezifizierten spektralen Charakteristik geprüft wird, mit welcher das Sicherheitsmerkmal spezifiziert wurde, bevor das Wertdokument mit dem Sicherheitsmerkmal ausgestattet wurde.

8. Verfahren nach Anspruch 7, **dadurch gekennzeichnet, dass**, zur Beurteilung der Ähnlichkeit des aufgenommenen Intensitätsspektrum S(λ) zu dem Referenzspektrum R(λ), der berechnete Abstand (A), insbesondere der Chessboard-Abstand (Ac), mit einer spezifizierten Schwankungsbreite verglichen wird, mit welcher die spektrale Charakteristik des Sicherheitsmerkmals spezifiziert wurde.

9. Verfahren nach einem der vorhergehenden Ansprüche, **dadurch gekennzeichnet, dass** das Anpassen des korrigierten Intensitätsspektrums S'(c, a, λ) an das Referenzspektrum R(λ) in einem spektralen Abschnitt (F) des aufgenommenen Intensitätsspektrums S(λ) durchgeführt wird, der nur Wellenlängen im Infraroten umfasst.

10. Verfahren nach einem der vorhergehenden Ansprüche, **dadurch gekennzeichnet, dass**, beim Berechnen des Abstands (A, Ac), der Abstand (A, Ac) nur für einen Teilabschnitt (T, T_{M}) desjenigen spektralen Abschnitts (F) berechnet wird, für den das Anpassen des korrigierten Intensitätsspektrums S'(c, a, λ) an das Referenzspektrum R(λ) durchgeführt wurde.

11. Verfahren nach einem der vorhergehenden Ansprüche, **dadurch gekennzeichnet, dass**, beim Berechnen des Abstands (A, Ac), der Abstand (A, Ac) nur für einen spektralen Abschnitt (T_{M}) des angepassten korrigierten Intensitätsspektrums S'(λ) von dem Referenzspektrum R(λ), berechnet wird, in dem das Wertdokument auf eine spektrale Charakteristik eines Sicherheitsmerkmals geprüft wird, wobei dieser spektrale Abschnitt (T_{M}) vorzugsweise vollständig im Infraroten liegt.

12. Verfahren nach einem der vorhergehenden Ansprüche, **dadurch gekennzeichnet, dass** das Anpassen des korrigierten Intensitätsspektrums S'(c, a, λ) an das Referenzspektrum R(λ) derart beschränkt durchgeführt wird, dass das angepasste korrigierte Intensitätsspektrum S'(λ) im Vergleich zu dem aufgenommenen Intensitätsspektrum S(λ) nicht verfälscht wird.

13. Verfahren nach einem der vorhergehenden Ansprüche, **dadurch gekennzeichnet, dass** das Anpassen dadurch beschränkt durchgeführt wird, dass für zwei von dem ersten und zweiten Korrekturparameter a*, c* abgeleitete Parameter w=1/(a*+c*) und s=a*/(a*+c*) eine oder mehrere bestimmte Nebenbedingungen vorgegeben werden.

14. Sensor zur Prüfung von Wertdokumenten, der dazu ausgebildet ist, das Verfahren nach einem der vorhergehenden Ansprüche durchzuführen.

15. Vorrichtung zur Prüfung von Wertdokumenten, die einen Sensor zur Prüfung von Wertdokumenten nach Anspruch 14 aufweist.

## Claims

1. A method for checking value documents, having the steps of:
- detecting at several different wavelengths (λ₁, λ₂, λ₃. ...) the light emanating from a value document for recording an intensity spectrum S(λ) of the value document,
- forming a corrected intensity spectrum S'(c, a, λ) = c + a·S(λ) by correcting the recorded intensity spectrum S(λ) using a linear correction function, so that the corrected intensity spectrum S'(c, a, λ) = c + a·S(λ) is a a linear transform of the recorded intensity spectrum S'(λ) and depends on a first correction parameter c and a second correction parameter a,
- adapting the corrected intensity spectrum S'(c, a, λ) to the reference spectrum R(λ) in order to reduce a deviation, defined by a distance measure, which the corrected intensity spectrum S'(c, a, λ) has from the reference spectrum R(λ), there being ascertained through the adapting a corrected intensity spectrum S'(λ) = c* + a*·S(λ) adapted to the reference spectrum R(λ), whose first correction parameter c assumes a value c* and whose second correction parameter a assumes a value a*,
- calculating a distance (A, A_{C}) which the corrected intensity spectrum S'(λ) = c* + a*·S(λ) adapted to the reference spectrum R(λ) has from the reference spectrum R(λ),
- employing the calculated distance (A, A_{C}) for assessing the similarity between the intensity spectrum S(λ) recorded from the value document and the reference spectrum R(λ).

2. The method according to claim 1, **characterized in that** the first and second correction parameters a, c are ascertained through the adapting of the linearly corrected intensity spectrum S'(c, a, λ) to the reference spectrum R(λ).

3. The method according to one or more of the preceding claims, **characterized in that** the adapting of the corrected intensity spectrum S'(c, a, λ) to the reference spectrum R(λ) is carried out individually for each value document to be checked, in particular individually for each recorded intensity spectrum S(λ) of each value document to be checked.

4. The method according to any of the preceding claims, **characterized in that**, through the adapting of the corrected intensity spectrum S'(c, a, λ) to the reference spectrum R(λ), fluctuations due to measuring technology that have influenced the recorded intensity spectrum S(λ) upon its recording are compensated at least partly.

5. The method according to any of the preceding claims, **characterized in that** the adapting of the corrected intensity spectrum S'(c, a, λ) to the reference spectrum R(λ) is carried out within the framework of a compensation calculation by which a least-squares fit of the corrected intensity spectrum S'(c, a, λ) to the reference spectrum R(λ) is carried out.

6. The method according to any of the preceding claims, **characterized in that** the distance (A) that is calculated between the adapted corrected intensity spectrum S'(λ) and the reference spectrum R(λ) is the chessboard distance (A_{C}) of the adapted corrected intensity spectrum S'(λ) from the reference spectrum R(λ).

7. The method according to any of the preceding claims, **characterized in that** by the method there is checked a spectral characteristic of a security feature of the value document for its similarity to a spectral characteristic specified for the security feature with which the security feature was specified before the value document was equipped with the security feature.

8. The method according to claim 7, **characterized in that**, for assessing the similarity of the recorded intensity spectrum S'(λ) to the reference spectrum R(λ), the calculated distance (A), in particular the chessboard distance (A_{C}), is compared with a specified fluctuation range with which the spectral characteristic of the security feature was specified.

9. The method according to any of the preceding claims, **characterized in that** the adapting of the corrected intensity spectrum S'(_{C}, a, λ) to the reference spectrum R(λ) is carried out in a spectral portion (F) of the recorded intensity spectrum S(λ) which comprises only wavelengths in the infrared.

10. The method according to any of the preceding claims, **characterized in that**, upon calculating the distance (A, A_{C}), the distance (A, A_{C}) is calculated only for a partial portion (T, T_{M}) of that spectral portion (F) for which the adapting of the corrected intensity spectrum S'(c, a, λ) to the reference spectrum R(λ) was carried out.

11. The method according to any of the preceding claims, **characterized in that**, upon calculating the distance (A, A_{C}), the distance (A, A_{C}) is calculated only for a spectral portion (T_{M}) of the adapted corrected intensity spectrum S'(λ) from the reference spectrum R(λ), in which the value document is checked for a spectral characteristic of a security feature, said spectral portion (T_{M}) preferably lying completely in the infrared.

12. The method according to any of the preceding claims, **characterized in that** the adapting of the corrected intensity spectrum S'(c, a, λ) to the reference spectrum R(λ) is carried out in a constrained manner such that the adapted corrected intensity spectrum S'(λ) is not falsified in comparison to the recorded intensity spectrum S(λ).

13. The method according to any of the preceding claims, **characterized in that** the adapting is carried out so as to be constrained by one or several certain side conditions being prescribed for two parameters w=1/(a*+c*) and s=a*/(a*+c*) derived from the first and second correction parameters a*, c*.

14. A sensor for checking value documents which is configured for carrying out the method according to any of the preceding claims.

15. An apparatus for checking value documents which has a sensor for checking value documents according to claim 14.

## Revendications

1. Procédé d'examen de documents de valeur, comprenant les étapes:
- détection de la lumière émanant d'un document de valeur à plusieurs longueurs d'ondes différentes (λ₁, λ₂, λ₃, ...) pour l'enregistrement d'un spectre d'intensité S(λ) du document de valeur,
- génération d'un spectre d'intensité corrigé S'(c, a, λ) = c + a·S(λ) par correction du spectre d'intensité (λ) enregistré S(λ) à l'aide d'une fonction linéaire de correction, de telle sorte que le spectre d'intensité corrigé S'(c, a, λ) = c + a·S(λ) est une transformée linéaire du spectre d'intensité enregistré S(λ) et dépend d'un premier paramètre de correction c et d'un deuxième paramètre de correction a,
- adaptation du spectre d'intensité corrigé S'(c, a, λ) au spectre de référence R(λ) afin de réduire une divergence, définie par une mesure de distance, que le spectre d'intensité corrigé S'(c, a, λ) présente par rapport au spectre de référence R(λ), cependant que, par l'adaptation, un spectre d'intensité corrigé S'(λ) = c* + a*·S(λ) adapté au spectre de référence R(λ) est déterminé, son premier paramètre de correction c adoptant une valeur c*, et son deuxième paramètre de correction a adoptant une valeur a*,
- calcul d'une distance (A, Ac) que le spectre d'intensité corrigé S'(λ) = c* + a* - S(λ) adapté au spectre de référence R(λ) présente par rapport au spectre de référence R(λ),
- utilisation de la distance (A, Ac) calculée pour l'appréciation de la similitude entre le spectre d'intensité S(λ) enregistré dans le cas du document de valeur et le spectre de référence R(λ).

2. Procédé selon la revendication 1, **caractérisé en ce que** le premier et le deuxième paramètre de correction a, c sont déterminés par adaptation du spectre d'intensité linéairement corrigé S'(c, a, λ) au spectre de référence R(λ).

3. Procédé selon une ou plusieurs des revendications précédentes, **caractérisé en ce que** l'adaptation du spectre d'intensité corrigé S'(c, a, λ) au spectre de référence R(λ) est effectuée individuellement pour chaque document de valeur à examiner, en particulier individuellement pour chaque spectre d'intensité S(λ) enregistré de chaque document de valeur à examiner.

4. Procédé selon une des revendications précédentes, **caractérisé en ce que**, par l'adaptation du spectre d'intensité corrigé S'(c, a, λ) au spectre de référence R(λ), des fluctuations dues à l'opération de mesurage et ayant influencé lors de son enregistrement le spectre d'intensité S(λ) enregistré sont au moins partiellement compensées.

5. Procédé selon une des revendications précédentes, **caractérisé en ce que** l'adaptation du spectre d'intensité corrigé S'(c, a, λ) au spectre de référence R(λ) est effectuée dans le cadre d'un calcul de compensation lors duquel un ajustement par les moindres carrés du spectre d'intensité corrigé S'(c, a, λ) au spectre de référence R(λ) est effectué.

6. Procédé selon une des revendications précédentes, **caractérisé en ce que** la distance (A) qui est calculée entre le spectre d'intensité corrigé adapté S'(λ) et le spectre de référence R(λ) est la distance de l'échiquier (Ac) corrigée adaptée S'(λ) par rapport au spectre de référence R(λ).

7. Procédé selon une des revendications précédentes, **caractérisé en ce que**, par le procédé, une caractéristique spectrale d'une caractéristique de sécurité du document de valeur est examinée quant à sa similitude avec une caractéristique spectrale spécifiée pour la caractéristique de sécurité avec laquelle la caractéristique de sécurité fut spécifiée avant que le document de valeur soit muni de la caractéristique de sécurité.

8. Procédé selon la revendication 7, **caractérisé en ce que** , pour l'appréciation de la similitude du spectre d'intensité enregistré S(λ) par rapport au spectre de référence R(λ), la distance (A) calculée, en particulier la distance de l'échiquier (Ac), est comparée avec une largeur spécifiée de fluctuation avec laquelle la caractéristique spectrale de la caractéristique de sécurité fut spécifiée.

9. Procédé selon une des revendications précédentes, **caractérisé en ce que** l'adaptation du spectre d'intensité corrigé S'(c, a, λ) au spectre de référence R(λ) est effectuée dans un segment spectral (F) du spectre d'intensité enregistré S(λ) qui ne comprend que des longueurs d'ondes dans la plage des infrarouges.

10. Procédé selon une des revendications précédentes, **caractérisé en ce que**, lors du calcul de la distance (A, Ac), la distance (A, Ac) n'est calculée que pour un segment partiel (T, T_{M}) du segment spectral (F) pour lequel l'adaptation du spectre d'intensité corrigé S'(c, a, λ) au spectre de référence R(λ) a été effectuée.

11. Procédé selon une des revendications précédentes, **caractérisé en ce que**, lors du calcul de la distance (A, Ac), la distance (A, Ac) par rapport au spectre de référence R(λ) n'est calculée que pour un segment spectral (T_{M}) du spectre d'intensité corrigé adapté S'(λ) dans lequel le document de valeur est examiné quant à une caractéristique spectrale d'une caractéristique de sécurité, ce segment spectral (T_{M}) se trouvant de préférence entièrement dans la plage des infrarouges.

12. Procédé selon une des revendications précédentes, **caractérisé en ce que** l'adaptation du spectre d'intensité corrigé S'(c, a, λ) au spectre de référence R(λ) est effectuée de manière limitée de telle façon que le spectre d'intensité corrigé S'(λ) adapté n'est pas faussé en comparaison avec le spectre d'intensité S(λ) enregistré.

13. Procédé selon une des revendications précédentes, **caractérisé en ce que** l'adaptation est effectuée de manière limitée par le fait que, pour deux paramètres w=1 / (a* + c*) et s=a* / (a* + c*) dérivés du premier et du deuxième paramètre de correction a*, c*, une ou plusieurs conditions auxiliaires définies sont déterminées.

14. Capteur destiné à l'examen de documents de valeur, qui est conçu pour effectuer le procédé selon une des revendications précédentes.

15. Dispositif d'examen de documents de valeur, comportant un capteur destiné à l'examen de documents de valeur selon la revendication 14.
